# EUROPÄISCHE PATENTSCHRIFT

(11) **EP 1 447 485 B1**
(45) Veröffentlichungstag und Bekanntmachung des Hinweises auf die Patenterteilung: **31.07.2013**
(21) Anmeldenummer: 03029682.6
(22) Anmeldetag: 23.12.2003
(51) Int. Cl.: E03C 1/22, E03C 1/264, E03C 1/298, F16K 15/14

(54) **Ablaufeinrichtung**
Draining device
Dispositif d'écoulement

(30) Priorität: 11.02.2003 DE 20302114 U
(43) Veröffentlichungstag der Anmeldung: 18.08.2004
(73) Patentinhaber: KERAMAG Keramische Werke Aktiengesellschaft, 40878 Ratingen (DE)
(72) Erfinder: Herkt, Ronald, Dr., 06886 Wittenberg (DE)
(74) Vertreter: Stenger, Watzke & Ring

(56) Entgegenhaltungen:
- EP-A- 1 209 294
- AU-A- 3 988 978
- US-A- 803 979
- US-A- 4 098 287
- US-A1- 2002 189 675
- US-A1- 2004 049 846

## Beschreibung

Die Erfindung betrifft eine Ablaufeinrichtung, insbesondere für ein Urinal, Bidet, Waschtisch oder dergleichen, die in ein Abflussrohr oder einen Ablaufkelch mittels eines ringförmigen Halteelements einbaubar ist, und aus dem Halteelement und einem elastischen Ventilelement besteht, welches Ventilelement im Normalzustand durch gasdicht aneinander anliegende Wandabschnitte den Austritt von geruchsbelasteten Gasen aus dem Ablaufsystem verhindert und bei Anfall von Flüssigkeit, die in einen trichterförmigen Einlauf des Ventilelementes gelangt, im Bereich der aneinander liegenden Wandabschnitte aufgrund der Schwerkraft der Flüssigkeit aufgeweitet wird und den Austritt der Flüssigkeit ermöglicht, wobei das ringförmige Halteelement mittels eines Klemmsitzes im Abflussrohr oder Ablaufkelch gehalten ist, wobei am ringförmigen Halteelement ein den trichterförmigen Einlauf des Ventilelementes abdeckendes Sieb (6) befestigt ist.

Die US 4,098,787, die US 2002/0189675 A1 und die US 2004/0049846 A1 offenbaren jeweils Ablaufeinrichtungen mit einem ringförmigen Halteelement und einem elastischen Ventilelement.

Ablaufeinrichtungen sind beispielsweise aus der GB 2 296 309 A bekannt.

Die US 803,979 betrifft eine gattungsgemäße Ablaufeinrichtung. Bei dieser Ablaufeinrichtung ist ein Sieb mittels einer Bajonettverbindung mit einem Gehäuse der Ablaufeinrichtung verbunden.

Aus der AU 39,889 A1 ist eine Ablaufeinrichtung mit einem Halteelement und einem Sieb bekannt. Das Sieb wird formschlüssig am Halteelement festgelegt, wozu das Sieb einzelne Rastbeinchen aufweist, die in einer innen umlaufenden Nut des Halteelements einrasten.

Ausgehend von dieser bekannten Ausführungsform liegt der Erfindung die **Aufgabe** zugrunde, das Sieb leicht auswechselbar anzuordnen.

Die **Lösung** dieser Aufgabenstellung durch die Erfindung ist dadurch gekennzeichnet, dass das Sieb mittels eines Rohrstückes am Halteelement befestigt ist, welches Rohrstück lösbar mit dem Halteelement verrastet ist, wobei das untere Ende des Rohrstücks mit federnden Rastzungen versehen ist, die in eine Nut des Halteelements einrastbar sind, und wobei das Sieb und das Halteelement durch auf die Rastzungen einwirkende Stifte voneinander lösbar sind.

Durch die Gestaltung des Halteringes und seine lösbare Befestigung im Abflussrohr mittels eines Klemmsitzes kann das Ventilelement einfach und schnell ausgewechselt werden. Außerdem ist es möglich, das Ventilelement auch in vorhandene Abflussleitungen von Urinalen, Bidets, Waschtischen oder dergleichen einzusetzen, so dass auf die Anordnung eines aufwendigen Geruchsverschlusses verzichtet werden kann.

Bei einer bevorzugten Ausführungsform der Erfindung wird der Klemmsitz durch einen elastischen Dichtring gebildet. Mit dieser Ausbildung ergibt sich eine besonders einfache Ausgestaltung, zumal der elastische Dichtring auf einfache Weise ausgewechselt werden kann.

Erfindungsgemäß ist am ringförmigen Halteelement ein den trichterförmigen Einlauf des Ventilelements abdeckendes Sieb befestigt werden. Dieses einfach anzubringende Sieb ergibt einen guten Schutz des Ventilelements gegen Beschädigungen durch in den trichterförmigen Einlauf gelangende Gegenstände.

Mit der Erfindung wird weiterhin vorgeschlagen, das Sieb mittels eines Rohrstückes am Halteelement zu befestigen, das mit einer lösbaren Verrastung versehen ist. Hierdurch wird der Aufbau der Ablaufeinrichtung und ihre Benutzung weiter vereinfacht. Auch das Rohrstück kann als Sieb oder Lochelement ausgeführt werden.

Mit der Erfindung wird schließlich vorgeschlagen, auch das Abflussrohr mittels Klemmsitz mit dem Ablaufkelch lösbar zu verbinden, vorzugsweise mit Hilfe einer in eine Ringnut eingelegten Dichtung. Das Abflussrohr kann ablängbar sein bzw. mit einem Ablaufbogen versehen werden.

Auf der Zeichnung ist ein Ausführungsbeispiel der erfindungsgemäßen Ablaufeinrichtung dargestellt, und zwar zeigt:
- Fig. 1: einen senkrechten Schnitt durch die Ablaufeinrichtung,
- Fig. 2: eine Schnittdarstellung vor dem Einbau der Ablaufeinrichtung in den Ablauf eines sanitärkeramischen Gegenstandes und
- Fig. 3: einen der Fig. 2 entsprechenden Schnitt nach dem Einbau der Ablaufeinrichtung.

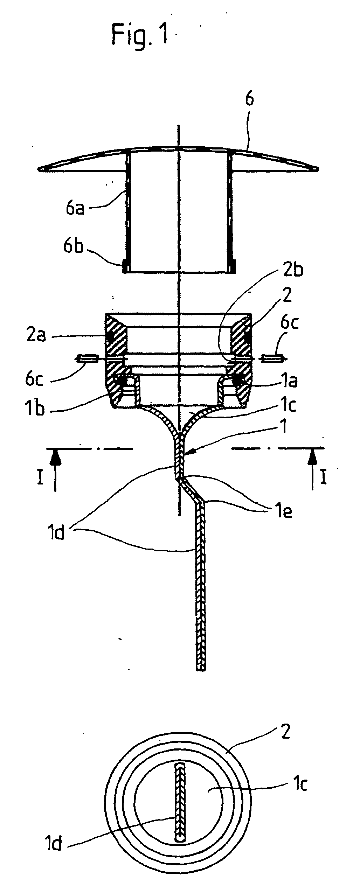

Die als Einzelteil in Fig. 1 dargestellte Ablaufeinrichtung umfaßt ein Ventilelement 1, das lösbar in ein ringförmiges Halteelement 2 eingesetzt ist. Das Ventilelement 1 besteht aus elastischem Material, beispielsweise geeignetem Kunststoff. An seinem oberen Ende ist ein ringförmiger Rand 1a ausgebildet. Mit diesem Rand 1a, gegebenenfalls unter Zuhilfenahme eines separaten O-Ringes, wird das Ventilelement 1 im Halteelement 2 lösbar befestigt.

An den oberen, ringförmigen Rand 1a schließt sich beim Ausführungsbeispiel ein Ringabschnitt 1b an, der in einen trichterförmigen Einlauf 1c übergeht. Während dieser trichterförmige Einlauf 1c am oberen Ende einen kreisförmigen Querschnitt hat, endet er am unteren Ende in einem rechteckigen Querschnitt, dessen Wandabschnitte aneinander aufgrund der Elastizität des Werkstoffes anliegen. Mit diesem rechteckigen Querschnitt, dessen Wandabschnitte im Normalfall aneinander anliegen, geht der trichterförmige Einlauf 1c in den eigentlichen Ventilbereich 1d über. Beim Ausführungsbeispiel erstreckt sich dieser Ventilbereich 1d über eine größere Länge und schließt zwei Abwinklungen 1e ein.

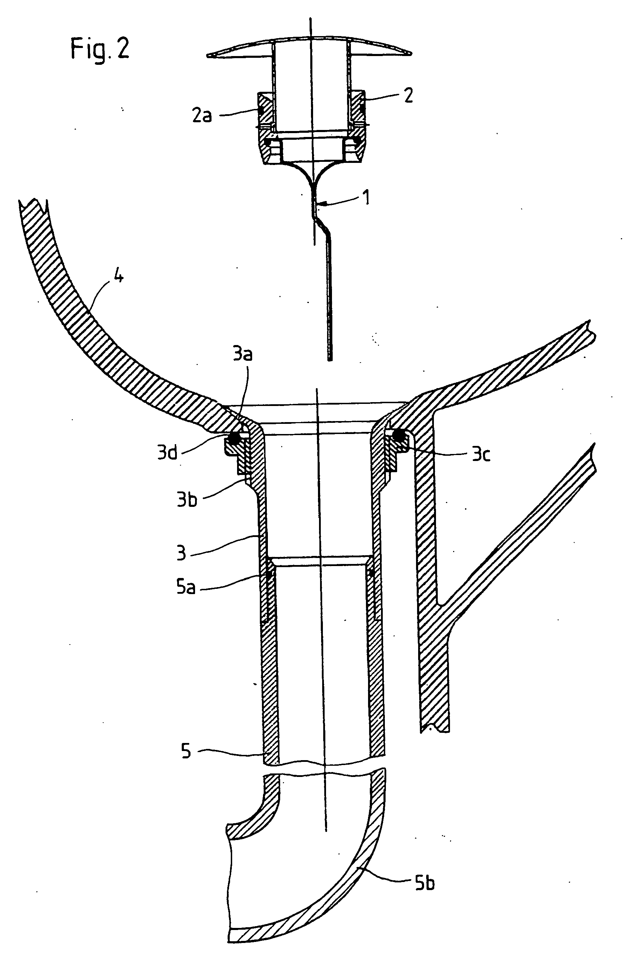

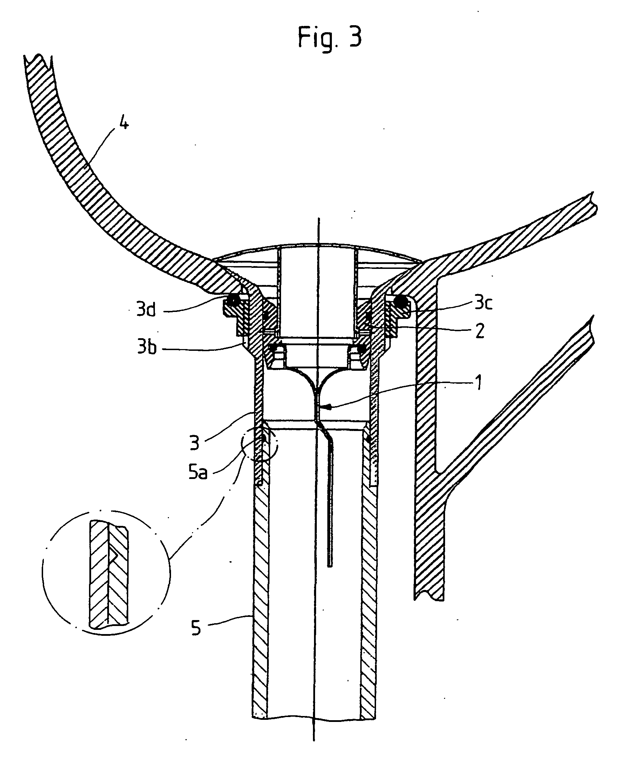

Das in einer ringförmigen Ausnehmung des Halteelements 2 lösbar befestigte Ventilelement 1 wird mittels des Halteelements 2 im Ablaufkelch 3 eines sanitärkeramischen Gegenstandes, beispielsweise eines Urinals, lösbar befestigt, wie die Fign. 2 und 3 zeigen. Zur Erzielung eines Klemmsitzes ist das Halteelement 2 mit einem elastischen Dichtring 2a versehen, der in eine Ringnut auf der äußeren Mantelfläche des Halteelements 2 eingelegt ist und teilweise aus dieser Oberfläche hervorsteht. Der Einsatz der aus Ventilelement 1 und Halteelement 2 bestehenden Ablaufeinrichtung kann auf diese Weise ohne Werkzeuge und jederzeit lösbar im Ablaufkelch 3 erfolgen.

Beim Ausführungsbeispiel ist das obere Ende des Ablaufkelches 3 mit einer konischen Erweiterung 3a ausgebildet, mit der es in den Ablauf eines sanitärkeramischen Gegenstandes 4 dichtend eingesetzt wird. Der Ablaufkelch 3 ist am oberen Ende mit einem Außengewinde 3b versehen, so daß er durch eine entsprechende Mutter 3c unter Zwischenfügen eines O-Ringes 3d am Ablauf des sanitärkeramischen Gegenstandes 4 abgedichtet befestigt wird.

An das untere Ende des Ablaufkelches 3 ist ein Abflußrohr 5 angeschlossen, das im Abflußsystem des sanitärkeramischen Gegenstandes 4 mündet, ohne daß zwischen dem Abflußrohr 5 und dem Abflußsystem ein wasserhaltender Rohrbogen oder ein anderer Geruchverschluß angeordnet ist. Das Abflußrohr 5 wird mittels eines durch eine Dichtung 5a gebildeten Klemmsitzes lösbar am Ablaufkelch 3 befestigt. Die Dichtung 5a ist in eine konische Ringnut eingelegt. Es kann von einem längeren Rohrstück abgelängt werden oder mit einem Ablaufbogen 5b versehen sein.

Im Normalzustand ist das Ventilelement 1 dadurch geruchsdicht verschlossen, daß seine Wandabschnitte im Ventilbereich 1d aneinander anliegen. Das Ventilelement 1 ermöglicht allerdings den Durchtritt von Flüssigkeit durch den Ventilbereich 1d, wenn Flüssigkeit in den trichterförmigen Einlauf 1c eintritt und sich die normalerweise aneinander anliegenden Wandabschnitte des Ventilbereiches 1d aufgrund der Schwerkraft der Flüssigkeit aufweiten. Auf diese Weise wird ein Austritt der Flüssigkeit aus dem Ventilelement 1 ermöglicht, wobei das Ventilelement 1 unverzüglich wieder schließt, wenn die Flüssigkeit den Ventilbereich 1d verlassen hat.

Auf diese Weise ist es möglich, beispielsweise ein Urinal ohne Spülung mit Wasser zu betreiben bzw. bei anderen sanitärkeramischen Gegenständen, wie beispielsweise Bidets oder Waschtischen, auf aufwendige Geruchsverschlüsse mit wasserhaltenden Teilen zu verzichten.

Beim Ausführungsbeispiel wird der trichterförmige Einlauf 1c des Ventilelementes 1 durch ein Sieb 6 abgedeckt, das mit einem Rohrstück 6a versehen ist, über das das Sieb 6 am Halteelement 2 lösbar befestigt wird. Beim dargestellten Ausführungsbeispiel ist das untere Ende des Rohrstückes 6a mit federnden Rastzungen 6b versehen, die in eine Nut 2b des Halteelements 2 einrasten und das Sieb 6 am Halteelement 2 festlegen. Durch auf die federnden Rastzungen 6b einwirkende Stifte 6c kann die Rastwirkung aufgehoben und das Rohrstück 6a aus dem Halteelement 2 entfernt werden. Das Rohrstück 6a ist ebenfalls als Lochelement ausgebildet.

### Bezugszeichenliste

- 1: Ventilelement
- 1a: Rand
- 1b: Ringabschnitt
- 1c: Einlauf
- 1d: Ventilbereich
- 1e: Abwinklung
- 2: Halteelement
- 2a: Dichtring
- 2b: Nut
- 3: Ablaufkelch
- 3a: Erweiterung
- 3b: Außengewinde
- 3c: Mutter
- 3d: O-Ring
- 4: sanitärkeramischer Gegenstand
- 5: Abflußrohr
- 5a: Dichtung
- 5b: Ablaufbogen
- 6: Sieb
- 6a: Rohrstück
- 6b: Rastzunge
- 6c: Stift

## Patentansprüche

1. Ablaufeinrichtung, insbesondere für ein Urinal, Bidet, Waschtisch oder dergleichen, die in ein Abflussrohr (5) oder einen Ablaufkelch (3) mittels eines ringförmigen Halteelements (2) einbaubar ist, und aus dem Halteelement (2) und einem elastischen Ventilelement (1) besteht, welches Ventilelement (1) im Normalzustand durch gasdicht aneinander anliegende Wandabschnitte den Austritt von geruchsbelasteten Gasen aus dem Ablaufsystem verhindert und bei Anfall von Flüssigkeit, die in einen trichterförmigen Einlauf (1c) des Ventilelementes (1) gelangt, im Bereich der aneinander liegenden Wandabschnitte aufgrund der Schwerkraft der Flüssigkeit aufgeweitet wird und den Austritt der Flüssigkeit ermöglicht, wobei das ringförmige Halteelement (2) mittels eines Klemmsitzes im Abflussrohr (5) oder Ablaufkelch (3) gehalten ist, wobei am ringförmigen Halteelement (2) ein den trichterförmigen Einlauf (1c) des Ventilelementes (1) abdeckendes Sieb (6) befestigt ist, **dadurch gekennzeichnet, dass** das Sieb (6) mittels eines Rohrstückes (6a) am Halteelement (2) befestigt ist, welches Rohrstück (6a) lösbar mit dem Halteelement verrastet ist, wobei das untere Ende des Rohrstücks (6a) mit federnden Rastzungen (6b) versehen ist, die in eine Nut (2b) des Halteelements (2) einrastbar sind, und wobei das Sieb (6) und das Halteelement (2) durch auf die Rastzungen (6b) einwirkende Stifte (6c) voneinander lösbar sind.

2. Ablaufeinrichtung nach Anspruch 1, **dadurch gekennzeichnet, dass** das Rohrstück (6a) als Sieb oder Lochelement ausgebildet ist.

3. Ablaufeinrichtung nach einem der Ansprüche 1 bis 2, **dadurch gekennzeichnet, dass** der Klemmsitz durch einen elastischen Dichtring (2a) gebildet ist.

## Claims

1. A draining device, in particular for a urinal, bidet, wash basin or the like, which can be installed in a drainpipe (5) or a cup-shaped spout (3) by means of an annular support member (2) and which is composed of the support member (2) and an elastic valve element (1), which valve element (1) prevents odorous gases from escaping from the draining system in the normal state by means of wall sections that are adjacent in a gastight manner and if liquid is produced which gets into a funnel-shaped inlet (1 c) of the valve element (1), this one will be expanded in the area of the adjacent wall sections due to the gravity of the liquid and the outlet of the liquid is enabled, wherein the annular support member (2) is held in the drainpipe (2) or the cup-shaped spout (3) by means of a clamping seat, wherein a sieve (6) which covers the funnel-shaped inlet (1c) of the valve element (1) is attached to the annular support member (2), **characterized in that** the sieve (6) is attached to the support member (2) by means of a pipe piece (6a), which pipe piece (6a) is detachably locked in with the support member, wherein the lower end of the pipe piece (6a) is provided with resilient locking lugs (6b) which can snap into a groove (2b) of the support member (2), and wherein the sieve (6) and the support member (2) can be detached from each other by means of pins (6c) which act upon the locking lugs (6b).

2. A draining device according to claim 1, **characterized in that** the pipe piece (6a) is designed as a sieve or a hole element.

3. A draining device according to one of the claims 1 through 2, **characterized in that** the clamping seat is formed by an elastic sealing ring (2a).

## Revendications

1. Dispositif d'écoulement, notamment destiné à un urinoir, à un bidet, à un lavabo ou similaire, qu'on peut installer dans un tuyau de drainage (5) ou un écoulement en forme de calice (3) par moyen d'un élément support annulaire (2) et qui est composé de l'élément support (2) et d'un élément de soupape élastique (1), lequel élément de soupape (1) empêche, en état normal, des gaz odorantes de sortir du système d'écoulement par moyen des sections de paroi adjacentes de manière étanche à gaz, et si du liquide est produit qui coule dans une entrée sous forme d'entonnoir (1c) de l'élément de soupape (1), ce dernier sera élargi au niveau des sections de paroi adjacentes à cause de la gravité du liquide et la sortie du liquide sera rendue possible, l'élément support annulaire (2) étant retenu dans le tuyau de drainage (5) ou dans l'écoulement en forme de calice (3) par moyen d'un siège de serrage, un tamis (6) recouvrant l'entrée sous forme d'entonnoir (1c) de l'élément de soupape (1) étant fixé à l'élément support (2), **caractérisé en ce que** le tamis (6) est fixé à l'élément support (2) par moyen d'une pièce de tuyau (6a), laquelle pièce de tuyau (6a) est encliquetée de manière amovible avec l'élément support, l'extrémité inférieure de la pièce de tuyau (6a) étant prévue de languettes d'encliquetage (6b) élastiques qui peuvent s'encliqueter dans une rainure (2b) de l'élément support (2), et le tamis (6) et l'élément support (2) étant susceptibles d'être détachés l'un de l'autre par moyen des chevilles (6c) qui agissent sur les languettes d'encliquetage (6b).

2. Dispositif d'écoulement selon la revendication 1, **caractérisé en ce que** la pièce de tuyau (6a) est configurée comme un tamis ou un élément à trous.

3. Dispositif d'écoulement selon l'une des revendications 1 à 2, **caractérisé en ce que** le siège de serrage est formé par une bague d'étanchéité (2a) élastique.
